# EUROPEAN PATENT SPECIFICATION

(11) **EP 2 465 117 B1**
(45) Date of publication and mention of the grant of the patent: **15.02.2017**
(21) Application number: 10765861.9
(22) Date of filing: 06.07.2010
(51) Int. Cl.: G21C 19/307

(54) **NUCLEAR POWER REACTOR VESSEL WITH AN APPARATUS FOR CLEANING CIRCULATING WATER IN THE REACTOR VESSEL**
LEISTUNGSKERNREAKTORBEHÄLTER MIT EINRICHTUNG ZUR REINIGUNG VON ZIRKULIERENDEM WASSER IN DEM REAKTORBEHÄLTER
RÉCIPIENT DE RÉACTEUR NUCLÉAIRE DE PUISSANCE AVEC DISPOSITIF DE PURIFICATION DE L'EAU CIRCULANT DANS LE RÉCIPIENT DE RÉACTEUR

(30) Priority: 10.08.2009 SE 0901071
(43) Date of publication of application: 20.06.2012
(73) Proprietor: Torgny Lagerstedt AB, 11352 Stockholm (SE)
(72) Inventor: LAGERSTEDT, Torgny, S-11352 Stockholm (SE)
(74) Representative: Winblad, Hans Peter
(86) International application number: PCT/SE2010/050790
(87) International publication number: WO 2011/019313

(56) References cited:
- WO-A1-2008/012008
- DE-A1- 3 715 467
- JP-A- 3 242 600
- JP-A- 2006 023 136
- JP-A- 2006 231 336
- JP-A- 2006 234 406

## Description

### Field of the invention

The present invention relates to a nuclear power reactor vessel with an apparatus for cleaning reactor vessel water in a nuclear power reactor vessel from particles suspended in the water, said reactor vessel being delimited by a reactor side wall and containing an inner moderator vessel surrounding a reactor core, a downcomer being defined between the reactor side wall and the moderator vessel and forming a flow path for a main circulation flow of the reactor vessel water from an upper low pressure portion of the reactor vessel to a lower high pressure portion of the reactor vessel, said upper low pressure portion being separated from the lower high pressure portion by a partition extending across the downcomer in the reactor vessel, and main circulation pumps being arranged to create said main circulation flow from the low pressure portion to the high pressure portion of the reactor vessel, at least one cleaning means being configured to clean the circulating water in the reactor vessel.

### Background of the invention

The invention originates from problems with solid contaminants in the form of particles suspended in circulating cooling water in a nuclear power reactor. The cooling water is circulated through a core in the reactor and the water is heated by power generated in the core. The problems with particles are present both in heavy water and light water reactors. However, the following description will be concentrated on light water reactors. The problem with the particles is present in the two common types of light water reactors, namely BWR (Boiling Water Reactor) and PWR (Pressure Water Reactor), respectively. In a BWR the circulating water is heated and starts to boil when circulated though the core. In the PWR the pressure is kept high and the water that circulates through the core does not reach its boiling point. The invention relating to the cleaning of the water in the reactor can be applied to the both PWR reactors and BWR reactors. However, the description of the reactor and the description of application of the invention will be concentrated on the BWR reactor.

The power in a nuclear reactor is generated in a core comprising a number of fuel assemblies. In the fuel assemblies, Uranium 235 is split in a fission process and a large amount of power is generated. The number of the fuel assemblies is of about 600 to 700. Each of the fuel assemblies harbours 64 fuel rods. Each of the fuel rods has a length of 4 meter. This gives a total length of the fuel rods in the core to 170 km. The fuel rod is build up by Uranium blocks contained in cladding pipes of Zirconium. Fuel assemblies are situated in the reactor vessel and transport of energy and cooling of the fuel assemblies is accomplished by a circulation flow axially along the fuel assemblies. The circulation flow is driven by Main Circulation Pumps (MCP). The MCP can be situated internally or externally the reactor vessel. The MCP drives the cooling water through the core. The pressure needed for driving the flow through the core is of about 1.5 bar (150 kPa). The total pressure in a BWR is of about 70 bars and the total pressure in a PWR is of about 155 bars. For clarity it is noted that this 1,5 bar is the pressure across the core and for a BWR the pressure at the underside of the core is 71,5 bar and at the upper side 70 bars. For future reference it can be noted also that this pressure drop is utilised in the invention to drive the flow through the cleaning apparatus. For a reactor having a thermal effect of 3,9 GW (GigaWatt) and an electrical output of 1,3 GW the flow rate through the core is of about 16 is *m*³/*s.* The flow rate is accomplished by a number of MCPs (usually eight)

The reactor vessel water has to be kept very clean in order to have low radiation levels in a nuclear power station. Particles transported through the core by the circulation water are subjected to neutron radiation and become highly radioactive. For the BWR reactor particles can also be carried by the steam to the turbines which will contaminate the turbines, heat exchangers, intermediate heaters, condensers and feed water systems. The contaminating particles can be metal particles, particles from welding and grinding, lost items such as eye glasses, cell phones, pens or small pieces of disintegrated lost items.

A major problem with the contaminants is that the contaminants damage the fuels rods in the core. Contaminants causes wear of the Zirconium cladding of the fuel rods. Especially contaminants stuck inside the mechanical structure of the core create damage. Flow induced vibration of the contaminants stuck in the structure of the core causes holes in the fuel cladding. Also, products from corrosion can get stuck on the fuel cladding and react chemically with the cladding and thus damage the cladding. A damage with a hole in the cladding results of a leakage of radioactive products of the fission into the reactor vessel water. The level of radiation in the reactor vessel water is continuously monitored. At a certain level of radiation the reactor has to be closed down for a removal of the damaged fuel rod. The main cause for unplanned reactor close downs is this damage of the fuel rods. It can here be noted that a close down of the reactor is very costly.

Contaminants in the reactor vessel water circulate with the cooling water through the core. At a main circulation flow rate of 16 *m*³/*s* and a typical reactor vessel volume of 500 *m*³ the number of turnarounds per hour of the volume of the reactor is 155 (750000 turnarounds/year). A contaminating particle not removed from the water is thus circulated through the core a large number of times. As noted before the core comprises 170 km of fuel rods. This length and the number of passes of a particle through the core results in a not insignificant probability for fuel damage due to particles circulating through the core or in the core structure trapped particles. A main part of the contaminants are introduced into the reactor vessel at a yearly revision (outage) of the nuclear power station. The reactor is closed down during the revision for work and maintenance in the reactor vessel, pumps, piping, valves, heat exchangers, steam and turbine systems etc. This includes welding and grinding in the rector system which in spite of rigorous cleaning measures adds contaminants to the system. Contaminants are also introduced into the reactor vessel water during the normal operation of the reactor.

For cleaning and conditioning of the water in the reactor vessel external filters outside the reactor vessel are used. A water flow is continuously during the operation of the reactor led to the filters outside the reactor vessel. The water is cleaned and returned to the reactor. The efficiency of the filter can be high but the low flow rate though the filter and the position of the outlet from the reactor vessel gives a low removal of particles. Also, a course grid is situated at the mouth (the inlet to) of the fuel assembly. The purpose of the grid is to prevent very large particles and rags (pieces of cloth) from entering the core. This grid has to be very coarse. This is because no additional pressure drop is allowed to be introduced in the flow path through the core. A low pressure drop is an inherent feature for the safety of a nuclear reactor. In case of a non function of the MCP self circulation through the core takes place which cools and removes heat from the fuel assemblies. This self circulation is not allowed to be restricted.

Various methods of cleaning the reactor vessel water are known from e.g. JP 20060231336 A, JP 2006234406 A and WO 2008012008 A.

JP 20060231336 A discloses a method of cleaning the reactor vessel water by introducing a filter through which the circulating reactor vessel water is led. The direction the water flow through the filter is in the same direction as the direction of the main circulation flow. The filter is a filter for the total MCP flow rate and the filter is placed on the suction side of the MCP. A filter used in this manner has several drawbacks, which will be elucidated in the following. The filter has to be very coarse because no or very low additional pressure drop in the flow path of the circulation flow is tolerated. A coarse filter has low efficiency for the collection of small particle. Also, the pressure drop has to be low because the filter is placed on the suction side of the MCP, and only a very small pressure drop on the suction side of the MCP is allowed. A pressure drop here results in a reduced pressure on the suction side of the pump which may cause cavitation of the MCP. Further, the filter is never allowed to be clogged or to reduce the flow rate because of the risk of endangering the cooling of the core. A circulation through the core must always be maintained. No circulation through the core results in a meltdown of the core.

JP 2006234406 A discloses a method of placing a filter over one of the opening of the internal MCP which is done during a close down of the nuclear reactor. To be able to install the filter in the reactor, the reactor has to be stopped and cooled down and the lid on the reactor vessel has to be removed from the top of the reactor vessel. The cleaning action of the filter is then obtained by running the MCP in different modes. Still, this is done during the outage of the rector. Before the reactor is returned to operation the filter introduced has to be removed.

WO 2008012008 A shows a method of cleaning the reactor vessel water by replacing one or several of the fuel assemblies in the core with some type of filter or even replace the complete core with a filter. The direction of the flow is the same as the direction of the circulation flow. This has several drawbacks. Replacing the fuel assembly with a non nuclear filter reduces the power output from the reactor. Also, a non active fuel assembly very much complicates the calculations of the operation of the neutron loading on the fuel elements.

### Summary of the invention

The object of the present invention is to provide a nuclear power reactor vessel with an apparatus having improved characteristics for cleaning the water in a vessel of a nuclear power reactor. According to the present invention the apparatus set forth in the introductory portion of the description is characterized by the features of claim 1. Thus, according to the principle of the invention the pressure difference across the partition in a downcomer in the nuclear power reactor is utilised to induce a partial flow through one or several cleaners mounted in respective apertures in the partition, from the high pressure side of the partition to the low pressure side thereof. Thus, these partial flows of reactor vessel water are driven through the cleaners by this pressure difference in a flow direction counter to , i.e. opposite to, the flow direction of the main circulation flow in the reactor vessel. The cleaners separate contaminating particles which are inadvertent introduced into the water in the reactor vessel both during normal operation of the nuclear power reactor and during outage and service of the reactor.

Said partial flows (bypass flows) through the cleaners are small in comparison to the main circulation flow. The bypass flow rate through the cleaners is determined by the wanted swiftness of the cleaning action and the allowed reduction of the main circulation flow by this bypass flow rate. The bypass flow rate reduces the flow rate trough the core by the same amount as the bypass flow rate. However, as will be seen below this reduction of flow rate through the core is small and is of no consequence for the operation of the reactor. The bypass flow rate needed for a swift reduction of the amount of particles in the reactor water is small. The reduction of the main circulation flow with this low bypass flow rate does not affect the cooling of the core. The volume of the reactor vessel is of about 500 *m*³ and a bypass flow rate of 10 *m*³/*h* through the cleaner reduces the amount of particles in the water with 80 % after 100 hours of operation. Here it can be noted that the normal uninterrupted running time of a reactor between services is about 7000 hours. Each cleaner is assumed to have a high efficiency, and nearly 100 % of the particles entering the cleaner are assumed to be trapped in the cleaner. It can be noted that the main circulation flow rate through the core is of about 16 *m*³/s (57600 *m*³/*h*)*.* A reduction of this main circulation flow rate of 57600 *m*³/*h* with 10 *m*³/*h* has neglect-able influence of the cooling of the core. The particles trapped in the cleaner are retained in the cleaner. By fitting the cleaner in the downcomer the cleaner can easily be taken out from the reactor vessel during the yearly outage at which the reactor is stopped and the reactor is opened and the internals of the reactor are available

Suitable embodiments of the cleaners are defined in the dependent claims. The cleaner can have the form of a filter which is connected to the partition via an inlet pipe and by sieve action cleans the reactor vessel water. With sieve action is here meant that a filter with narrow passages traps particles larger than the size of the said narrow passages. Several filters can be fitted in the downcomer. Also, it is conceivable that the filters can be made with such a large holding capacity that the time between replacements of the filers can be long. Possibly, the filter can last the lifetime of the reactor. By using several filters it can also be possible to use the filters in sequence. The reactor is then initially started with only one of the filters in operation the other filters are closed with a closing device that can be opened easily. When reactor has been operated for the period (time between outage) and the filter used is full and clogged, one of the closed and unused filter is be opened for operation during the next running period of the reactor.

The inlet pipe may extend into a sieve basket to prevent trapped particles to exit from the filter during variation in the flow situations in the reactor. For instance, the flow variations during quick stop of the reactor and tripping of the MCP pumps are large. The inlet pipe extending into the basket reduces the risk of particles re-entering the reactor vessel water during these conditions.

According to the invention the cleaners can also be configured to use centrifugal action to separate and trap particles. For example, the cleaners may be of a cyclone type connected to a pipe attached to the partition and having a cyclone chamber with an upper tangential inlet and a lower collecting chamber.

The invention also concerns a nuclear power reactor vessel according to independent claim 6. This vessel comprises a cleaner in the form of a centrifugal cleaner integrated in one or several of the internal main circulation pumps which are used in a BWR with internal main circulation pumps. Here, a centrifugal action is used in a centrifugal chamber co-rotating with a pump wheel for trapping and retaining particles.

The invention will be further described below with reference to the accompanying drawings.

### Brief description of the drawings

Figure 1 shows a reactor vessel with external main circulation pumps (one pump only is shown) and a cleaner according to the invention.
Figure 2 shows a reactor vessel with internal main circulation pumps (only one pump is shown) and a cleaner according to the invention.
Figure 3 shows a cleaner in the form of a filter.
Figure 4 shows a cleaner in the form of a sieve basket and an inlet pipe extending axially into the sieve basket.
Figure 5 illustrates a side and a plan view of a cleaner in form of a cyclone.
Figure 6 shows a cleaner in the form of a centrifugal cleaner integrated in one of the internal main circulation pumps.

### Detailed description of preferred embodiments

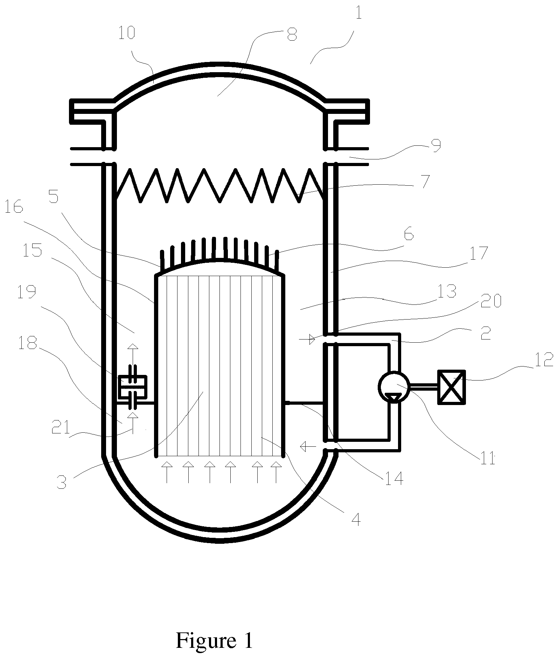

Figure 1 shows a light water nuclear reactor 1 with an external main circulation circuit 2 for the cooling of a core 3 which is situated in a moderator vessel 16. The reactor has several main circulation circuits one of which is shown in figure 1. Fission processes in fuel assemblies 4 in the core 3 heats the water circulating through the core 3. In a boiling water reactor of figure 1 the water is heated to boiling when circulating through the core 3. The pressure in the reactor during operation is 70 bar and the temperature 270 degrees Celsius. Steam generated in the core 3 is separated from the water by steam separators 6 situated on the lid 5 of the moderator vessel 16. The steam is thereafter led through moist separators 7 for the final removal of moist from the steam. The steam continues to a steam dome 8 and exits the reactor vessel 1 via steam lines 9 for further transport to steam turbines (not shown in figure 1). The reactor vessel is closed by a reactor lid 10. The reactor lid 10 can be taken off the reactor vessel 1 thereby making the inner of the reactor available for service on the internals of the reactor 1 or for change of the fuel assemblies 4 in the core 3. A pump 11, driven by a motor 12, drives the circulation flow through the core 3. The reactor vessel water in the circulation flow is taken from an upper side 13 of a partition 14 which is situated in a downcomer 15. The downcomer 15 is formed by a space between the moderator vessel 16 and a wall 17 of the reactor vessel 1. The circulation flow from circulation circuit 2 is driven to an underside 18 of the partition 14 and further through the core 3. A flow direction arrow 20 indicates the flow direction in the circulation circuit. The pressure drop across the core 3 at full power of the nuclear reactor is of about 1,5 bar. As there is no additional pressure drop in the circulation circuit, the pressure across the partition 14 is 1,5 bar. Feed water (condensed steam) is returned to the reactor vessel 1 via the downcomer 15. The feed water system, feed water pumps and feed water piping are not shown in figure 1.

According to the invention, for efficient cleaning of the reactor vessel water, at least one, but preferably several cleaners 19 are fitted to apertures in the partition 14 evenly distributed in the circumferential direction thereof and located in between the main circulation pumps 11. The pressure difference between the upper side 13 and the underside 18 of the partition 14 drives a partial flow through the cleaners in a current direction counter to the main circulation flow direction. The flow direction through the cleaners is shown with a flow direction arrow 21.

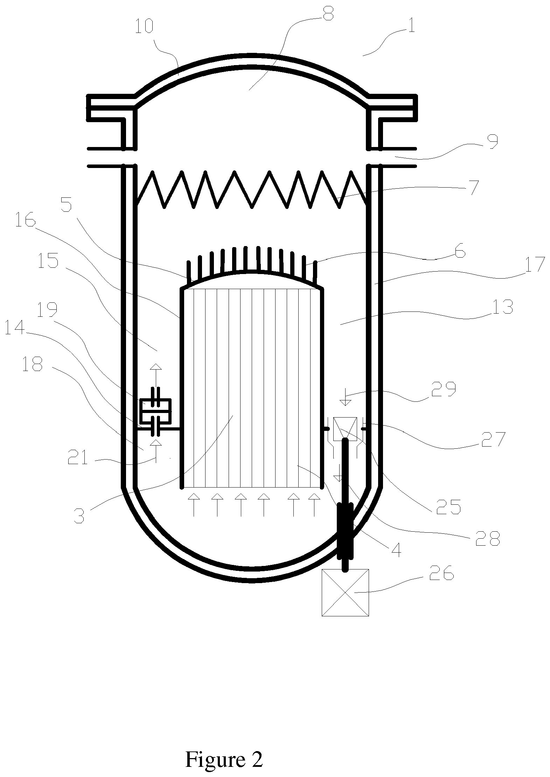

Figure 2 shows a light water nuclear reactor 1 with an internal circulation circuit with internal main circulation pumps. The design of figure 2 with internal circulation pumps is the preferred design in modern BWRs. By this design the amount of external piping is reduced and thus reducing the risk of pipe breaks. External pipes increases the risk of severe loss of coolant and the ensuing damage to the core. Figure 2 shows a motor 26, a pump spindle 28, a pump wheel 25 and a pump housing 27. The pump spindle 28 reaches through the reactor vessel wall 17. The circulation circuit cools the core which is situated in the moderator vessel 16. In a nuclear reactor with internal circulation circuits the usual number of cooling circuits is 8. In figure 2 one of these circuits is shown. Fission processes in fuel assemblies 4 in the core heats the water circulating through the core 3. In a boiling water rector shown in figure 2 the water circulating through the core 3 is heated to boiling. The pressure in the reactor is 70 bar and the temperature 270 degrees Celsius. Steam generated in the core 3 is separated from the water by steam separators 6 situated on the lid 5 of the moderator vessel 5. The steam is thereafter led through the moist separators 7 for the final removal of moist from the steam. The steam continues to a steam dome 8 and exits the reactor vessel 1 via steam lines 9 for further transport to steam turbines (not shown in figure 2). The reactor vessel is closed by a reactor lid 10. The reactor lid 10 can be taken off the reactor vessel 1 thereby making the inner of the reactor available for service on the internals of the reactor 1 or for change of fuel assemblies 4 in the core 3. The pump wheel 25 with the motor 26 drives a circulation flow through the core. The pump wheel 25 with the surrounding pump housing 27 reaches through the partition 14. Reactor vessel water for the circulation is taken from the upper side 13 of the partition 14 which is situated in the downcomer 15. The downcomer 15 is formed by the space between the moderator vessel 16 and the wall 17 of the reactor vessel 1. The circulation flow from the circulation circuit is driven to the underside 18 of the partition 14 and further through the core 3. A flow direction arrow 29 indicates the flow direction in the circulation circuit. The pressure drop across the core 3 at full power of the nuclear reactor is of about 1,5 bar. As there is no additional pressure drop in the circulation circuit, the pressure across the partition 14 is 1,5 bar. Feed water (condensed steam) is returned to the reactor vessel 1 via the downcomer 15. Feed water system, feed water pumps and feed water pipes is not shown in figure 2. According to the invention, for efficient cleaning of the reactor vessel water, at least one, but preferably several cleaners 19 are fitted to apertures evenly distributed in the partition 14 in the circumferential direction thereof and located in between the main circulation pumps. The pressure difference between the upper side 13 and the underside 18 of the partition 14 drives a small flow of vessel water through the cleaners in a current direction counter to the main circulation flow direction. The flow direction through the cleaner is shown with the flow direction arrow 21.

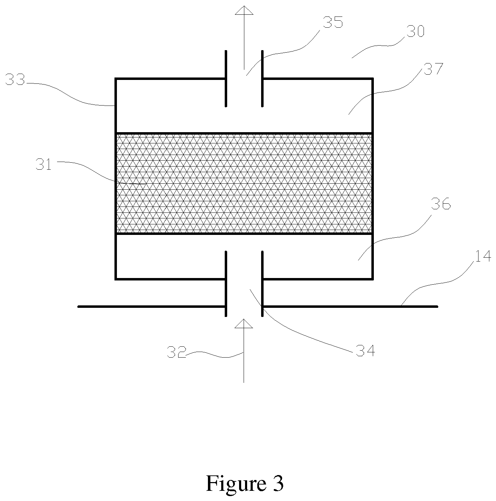

Figure 3 shows a cleaner 30 according to claim 2 which is situated in the downcomer 15. The cleaner 30 connects to the partition 14 via an inlet pipe 34 which is fitted to apertures in the partition 14. Each cleaner 30 cleans the reactor vessel water by sieve action in a filter element 31. By sieve action is meant that a filter with narrow passages in the filter element 31 traps particles larger than the size of the said narrow passages. The reactor vessel water flow and the direction of the flow is indicated by a flow direction arrow 32. The filter element 31 is encased in a filter chamber 33 which has inlet pipe 34, an outlet pipe 35, inlet chamber 36 and an outlet chamber 37. A pressure of 1,5 bar across the partition 14 drives a small flow of vessel water through the cleaner 30 in a current direction counter to the direction of the main circulation flow.

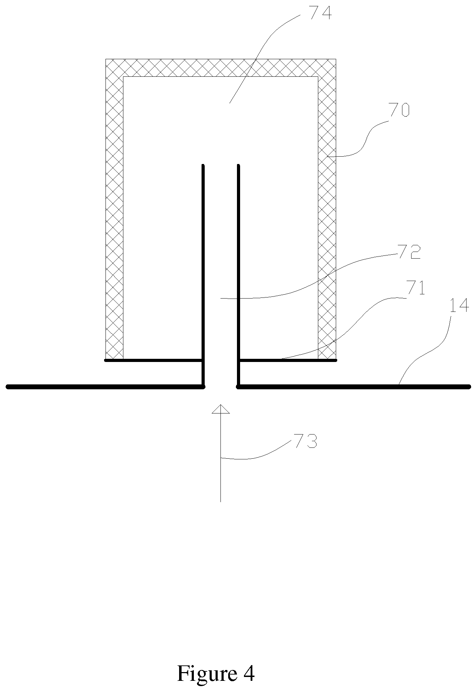

Figure 4 shows a cleaner 74 according to claim 3. The cleaner 74 connects to the partition 14 via an inlet pipe 72 which in turn is fitted to an aperture in the partition 14. The cleaner 74 cleans the reactor vessel water by sieve action in a filter basket 70. The cleaner has a lower bottom 71 and an inner inlet pipe 72. Reactor vessel water to be cleaned flows into the filter basket via the inlet pipe 72. The direction of the flow is indicated with a flow direction arrow 73. A design of a filter according to figure 4 has a large filter area and thus a large holding capacity for particles. The time intervals for emptying the cleaner 74 can be made long. The axial extension of the inlet pipe 72 into the filter basket 70 helps to retain already trapped particles inside the filter 74. Problems with entrainment of particles already trapped can arise at varying flow rates and especially at transient condition at the stopping of the main circulation pumps at which back flow may take place. The axial extension of the inlet pipe 72 into the filter basket prevents the above mentioned entrainment.

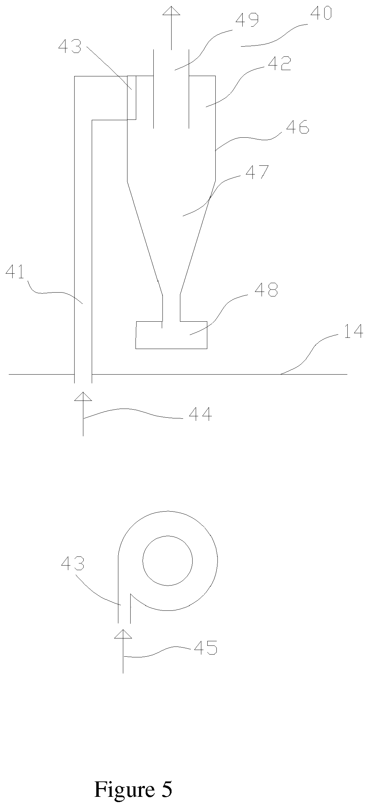

Figure 5 illustrates a side view and a plan view of a cleaner 40 according to claim 5. The cleaner 40 is connected to the partition 14 via an inlet pipe 41 which in turn is fitted to an aperture in the partition 14. The cleaner 40 cleans the reactor vessel water by centrifugal action in the cleaner 40 which is a conventional cyclone. The water to be cleaned flows into the cleaner 40 through the inlet pipe 41 which directs the water into an upper cyclone chamber 42. The flow enters the upper cyclone chamber 42 via a tangential inlet 43. The flow direction in the inlet pipe 41 is shown with a flow direction arrow 44. The tangential inlet 43 with the flow direction arrow 45 is shown more clearly in the plan view of fig. 5. The tangential inflow in the upper cyclone chamber 42 sets the water in rotation in the cyclone chamber 42 and heavy particles are by centrifugal action forced to an outer wall 46. The particles are thereafter driven by the internal flow to a conical chamber 47 down into a collecting chamber 48. The clean water exits the cyclone via an outlet 49.

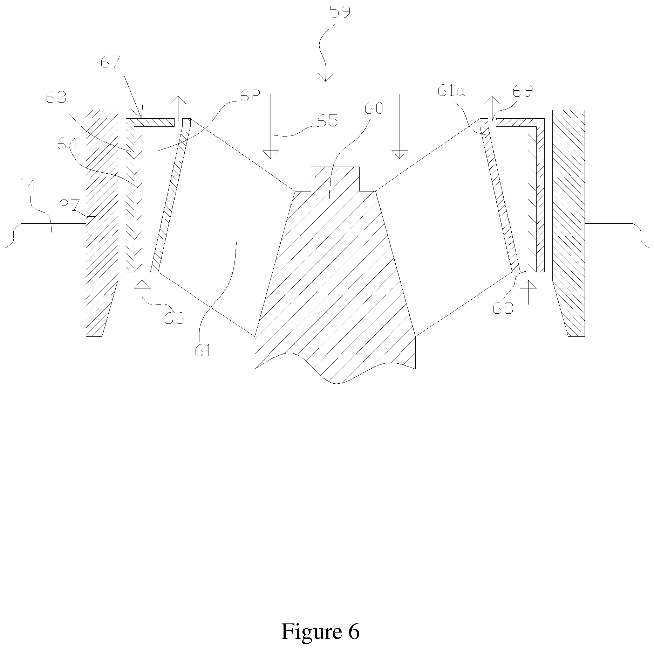

Figure 6 shows an internal main circulation pump 59 according to claim 6. The main circulation pump 59, which aside from being one of the main circulation pumps in the power reactor vessel 1 of the BWR type, also function as a centrifugal cleaner with an integrated centrifugal action. The main circulation flow is generated by a pump wheel 60 with pump vanes 61 and a shell 61a. The direction of the main circulation flow pumped by the pump vanes 61 is from the low pressure side 13 to the high pressure side 18 in the downcomer 15. The flow and flow direction of the main circulation is shown with a flow direction arrow 65. The pump 59 with the non rotating outer housing 27 is situated in an opening and extends through the partition 14 which separates the low pressure side 13 from the high pressure side 18 of the downcomer 15. A centrifugal chamber 62 is formed between the shell 61a and a wall 63 which co-rotates with the shell 61a. The centrifugal chamber 62 has retaining elements 64 for the retaining trapped particles. The centrifugal chamber 62 has a lower inflow slot 68 and an upper outflow slot 69. A partial bypass flow of reactor vessel water flows through the centrifugal chamber 62 in the direction shown by a flow direction arrow 66, i.e. counter to the main flow direction 65. The bypass flow is driven by the pressure difference across the partition 14. The bypass flow enters through the lower slot 68 and exits through the upper slot 69 in the flow direction 66 which is thus opposite to the flow direction 65 of the main circulation flow. During the passage of the bypass flow through the centrifugal chamber 62 heavy particles are subjected to centrifugal forces which forces the particles toward the wall 63 with the retaining elements 64.

## Claims

1. A nuclear power reactor vessel, said reactor vessel (1) being delimited by a reactor side wall (17) and containing an inner moderator vessel (16) surrounding a reactor core (3), a downcomer (15) being defined between the reactor side wall (17) and the moderator vessel (16) and forming a flow path for a main circulation flow (20, 29) of the reactor vessel water from an upper low pressure portion (13) of the reactor vessel (1) to a lower high pressure portion (18) of the reactor vessel (1), said upper low pressure portion (13) being separated from the lower high pressure portion (18) by a partition (14) extending across the downcomer (15) in the reactor vessel (1), and main circulation pumps (11; 25, 27) being arranged to create said main circulation flow (20; 29) from the low pressure portion (13) to the high pressure portion (18) of the reactor vessel (1), said reactor vessel comprising at least one cleaning means configured to clean the circulating water in the reactor vessel from particles suspended in the water, **characterized in that** at least one, but preferably several apertures are formed in the partition (14), each said aperture communicating with a respective cleaning means (19; 40) for cleaning of a partial flow of the reactor vessel water driven, by means of the pressure difference between the high and low pressure portions (13, 18) of the reactor vessel (1), through the cleaning means (19; 40) in a flow direction (21) counter to the flow direction (20, 29) of the main circulation flow from the low pressure portion (13) to the high pressure portion (18) of the reactor vessel (1) by means of the main circulation pumps (11, 25, 27).

2. The nuclear power reactor vessel according to claim 1, **characterized in that** said cleaning means (19) is connected to the partition (14) via a pipe (34, 72) and comprises a filter (31; 70) which by sieve action cleans the water flow through the cleaning means (19).

3. The nuclear power reactor vessel according to claim 2, **characterized in that** said pipe (72) extends into a surrounding sieve basket (70).

4. The nuclear power reactor vessel according to claim 1, **characterized in that** said cleaning means is configured to separate and retain particles by centrifugal action.

5. The nuclear power reactor vessel according to claim 4, **characterized in that** said cleaning means comprises a cleaning means (40) of a cyclone type connected to a pipe (41) attached to the partition (14) and having a cyclone chamber (42) with an upper tangential inlet (43) and a lower collecting chamber (48).

6. A nuclear power reactor vessel, said reactor vessel (1) being delimited by a reactor side wall (17) and containing an inner moderator vessel (16) surrounding a reactor core (3), a downcomer (15) being defined between the reactor side wall (17) and the moderator vessel (16) and forming a flow path for a main circulation flow (65) of the reactor vessel water from an upper low pressure portion (13) of the reactor vessel (1) to a lower high pressure portion (18) of the reactor vessel (1), said upper low pressure portion (13) being separated from the lower high pressure portion (18) by a partition (14) extending across the downcomer (15) in the reactor vessel (1), and main circulation pumps (59) being fitted in respective openings in the partition (14) to create said main circulation flow (65) from the low pressure portion (13) to the high pressure portion (18) of the reactor vessel (1), said reactor vessel comprising at least one cleaning means configured to clean the circulating water in the reactor vessel from particles suspended in the water, **characterized in that** the main circulation pumps (59) comprise a pump wheel (60) integrated with a respective centrifugal cleaning unit (67) and having pump vanes (61) with a surrounding shell (61a) which in turn is encompassed by a co-rotating wall (63) of the pump wheel (60), a centrifugal chamber (62) being formed between the co-rotating wall (63) and the shell (61a), said co-rotating wall (63) having on inner surfaces thereof retaining elements (64) for retaining of trapped contaminating particles, and **in that** the centrifugal chamber (62) has a lower inflow slot (68) and an upper outflow slot (69) through which a partial flow (66) of reactor vessel water can, by means of the pressure difference between the low pressure portion (13) and the high pressure portion (18), flow through the centrifugal cleaning unit (67) in a flow direction counter to the main circulation flow (65) generated by the main circulation pumps (59) from the low pressure portion (13) to the high pressure portion (18) of the reactor vessel (1).

## Patentansprüche

1. Leistungskernreaktorbehälter (1), der von einer Reaktorseitenwand (17) begrenzt ist und einen inneren Moderatorbehälter (16) umfasst, der einen Reaktorkern (3) umgibt, wobei zwischen der Reaktorseitenwand (17) und dem Moderatorbehälter (16) ein Rücklaufrohr (15) angeordnet ist, der einen Strömungsweg für einen Hauptumwälzstrom (20, 29) des Wassers des Reaktorbehälters bildet, der sich aus einem oberen Niederdruckbereich (13) des Reaktorbehälters (1) bis einen unteren Hochdruckbereich (18) des Reaktorbehälters (1) erstreckt, wobei der obere Niederdruckbereich (13) von dem unteren Hochdruckbereich (18) durch eine Trennwand (14) getrennt ist, die sich über das Rücklaufrohr (15) im Behälter (1) erstreckt, und wobei Hauptumwälzpumpen (11; 25, 27) angeordnet sind, um den Hauptumwälzstrom (20; 29) vom Niederdruckbereich (13) zum Hochdruckbereich (18) des Reaktorbehälters (1) zu erzeugen, wobei der Reaktorbehälter mindestens eine Reinigungseinrichtung aufweist, die konfiguriert ist, um das zirkulierende Wasser in dem Reaktorbehälter von im Wasser suspendierten Teilchen zu reinigen, **dadurch gekennzeichnet, dass** mindestens eine, aber vorzugsweise mehrere Öffnungen in der Trennwand (14) ausgebildet sind, die jeweils mit einer jeweiligen Reinigungseinrichtung (19; 40) zur Reinigung des durchströmten Teilstroms des Reaktorbehälters kommunizieren, wobei dies durch die Druckdifferenz zwischen den Hoch- und Niederdruckbereichen (13, 18) des Reaktorbehälters (1) angetrieben ist, die durch die Reinigungseinrichtung (19; 40) in Strömungsrichtung (21) entgegen der Strömungsrichtung (20, 29) der Hauptumwälzstrom vom Niederdruckbereich (13) zum Hochdruckbereich (18) des Reaktorbehälters (1) mittels der Hauptumwälzpumpen (11, 25, 27) strömt.

2. Leistungskernreaktorbehälter nach Anspruch 1, **dadurch gekennzeichnet, dass** die Reinigungseinrichtung (19) über ein Rohr (34, 72) mit der Trennwand (14) verbunden ist und ein Filter (31; 70) aufweist, der durch Siebwirkung den Wasserstrom durch die Reinigungseinrichtung (19) reinigt.

3. Leistungskernreaktorbehälter nach Anspruch 2, **dadurch gekennzeichnet, dass** das Rohr (72) sich in einen umlaufenden Siebkorb (70) erstreckt.

4. Leistungskernreaktorbehälter nach Anspruch 1, **dadurch gekennzeichnet, dass** die Reinigungseinrichtung konfiguriert ist, um Partikeln durch Zentrifugalwirkung zu trennen und festzuhalten.

5. Leistungskernreaktorbehälter nach Anspruch 4, **dadurch gekennzeichnet, dass** die Reinigungseinrichtung eine Reinigungseinrichtung (40) des Zyklontyps enthält, die mit einer an der Trennwand (14) befestigten Rohrleitung (41) verbunden ist, die auch eine Zyklonkammer (42) mit einem oberen tangentialen Einlass (43) und einem unteren Sammelraum (48) enthält.

6. Leistungskernreaktorbehälter (1), der von einer Reaktorseitenwand (17) begrenzt ist und einen inneren Moderatorbehälter (16) umfasst, der einen Reaktorkern (3) umgibt, wobei zwischen der Reaktorseitenwand (17) und dem Moderatorbehälter (16) ein Rücklaufrohr (15) angeordnet ist, der einen Strömungsweg für einen Hauptumwälzstrom (65) des Wassers des Reaktorbehälters bildet, der sich aus einem oberen Niederdruckbereich (13) des Reaktorbehälters (1) bis einen unteren Hochdruckbereich (18) des Reaktorbehälters (1) erstreckt, wobei der obere Niederdruckbereich (13) von dem unteren Hochdruckbereich (18) durch eine Trennwand (14) getrennt ist, die sich über das Rücklaufrohr (15) im Behälter (1) erstreckt, und wobei Hauptumwälzpumpen (59) in jeweiligen Öffnungen in der Trennwand (14) angebracht sind, um den Hauptumwälzstrom (65) von dem Niederdruckbereich (13) zu dem Hochdruckbereich (18) des Reaktorbehälters (1) zu erzeugen, wobei der Reaktorbehälter mindestens eine Reinigungseinrichtung aufweist, die konfiguriert ist, um das zirkulierende Wasser in dem Reaktorbehälter von im Wasser suspendierten Teilchen zu reinigen, **dadurch gekennzeichnet, dass** die Hauptumwälzpumpen (59) ein mit einer jeweiligen Zentrifugalreinigungseinheit (67) integriertes Pumpenrad (60) umfassen, das auch Pumpenschaufeln (61) mit einer umlaufenden Schale (61 a) aufweist, wobei die Schale von einer korotierenden Wand des Pumprades (60) umgeben ist, und wobei eine Zentrifugalkammer (62) zwischen der korotierenden Wand (63) und der Schale (61 a) ausgebildet ist, wobei die korotierenden Wand (63) an ihren inneren Oberflächen Halteelemente (64) zum Halten von eingeschlossenen kontaminierenden Teilchen aufweist, und dass die Zentrifugalkammer (62) einen unteren Einströmschlitz (68) und einen oberen Ausflussschlitz (69) aufweist, durch die ein Teilstrom (66) des Wassers des Reaktorbehälters mittels der Druckdifferenz zwischen dem Niederdruckbereich (13) und dem Hochdruckbereich (18) durch die Zentrifugalreinigungseinheit (67) in einer Strömungsrichtung strömen kann, die entgegen dem von den Hauptumwälzpumpen (59) erzeugten Hauptumwälzstrom (65) vom Niederdruckbereich (13) zum Hochdruckbereich (18) des Reaktorbehälters (1) ist.

## Revendications

1. Récipient de réacteur nucléaire de puissance, ledit récipient de réacteur (1) étant délimité par une paroi latérale de réacteur (17) et contenant un récipient modérateur intérieur (16) entourant un noyau de réacteur (3), un déversoir (15) étant défini entre la paroi latérale de réacteur (17) et le récipient modérateur (16) et formant un trajet de flux pour un flux de circulation principal (20, 29) de l'eau du réacteur provenant d'une partie supérieure basse pression (13) du récipient de réacteur (1) vers une partie inférieure basse pression (18) du récipient de réacteur (1), ladite partie supérieure basse pression (13) étant séparée de la partie inférieure haute pression (18) par une cloison (14) s'étendant à travers le déversoir (15) dans le récipient de réacteur (1), et des pompes de circulation principales (11; 25, 27) étant agencées pour créer ledit flux de circulation principal (20; 29) depuis la partie basse pression (13) jusqu'à la partie haute pression (18) du récipient de réacteur (1), ledit récipient de réacteur comprenant au moins un moyen de nettoyage configuré pour nettoyer l'eau de circulation dans le récipient de réacteur des particules en suspension dans l'eau, **caractérisé en ce qu**'au moins une, mais de préférence, plusieurs ouvertures sont formées dans la cloison (14), chacune des dites ouvertures communiquant avec un moyen de nettoyage respectif (19; 40) pour le nettoyage d'un flux partiel de l'eau du récipient de réacteur entraîné par la différence de pression entre les parties haute et basse pression (13, 18) du récipient de réacteur (1), par les moyens de nettoyage (19, 40) dans une direction de flux (21) opposée à la direction de flux (20, 29) du flux de circulation principal depuis la partie basse pression (13) vers la partie haute pression (18) du récipient de réacteur (1) par les moyens des pompes de circulation (11, 25, 27).

2. Récipient de réacteur nucléaire de puissance selon la revendication 1, **caractérisé en ce que** ledit moyen de nettoyage (19) est relié à la cloison (14) par l'intermédiaire d'un tuyau (34, 72) et comprend un filtre (31; 70) qui, par tamisage, nettoie le flux d'eau par les moyens de nettoyage (19).

3. Récipient de réacteur nucléaire de puissance selon la revendication 2, **caractérisé en ce que** ledit tuyau (72) s'étend dans un panier de tamis environnant (70).

4. Récipient de réacteur nucléaire de puissance selon la revendication 1, **caractérisé en ce que** ledit moyen de nettoyage est configuré pour séparer et retenir les particules par action centrifuge.

5. Récipient de réacteur nucléaire de puissance selon la revendication 4, **caractérisé en ce que** ledit moyen de nettoyage comprend un moyen de nettoyage (40) de type cyclone relié à un tuyau (41) fixé à la cloison (14) et comportant une chambre de cyclone (42) avec une entrée tangentielle supérieure (43) et une chambre collectrice inférieure (48).

6. Récipient de réacteur nucléaire de puissance, ledit récipient de réacteur (1) étant délimité par une paroi latérale de réacteur (17) et contenant un récipient modérateur intérieur (16) entourant un noyau de réacteur (3), un déversoir (15) étant défini entre la paroi latérale de réacteur (17) et le récipient modérateur (16) et formant un trajet de flux pour un flux de circulation principal (65) de l'eau du réacteur provenant d'une partie supérieure basse pression (13) du récipient de réacteur (1) vers une partie inférieure basse pression (18) du récipient de réacteur (1), ladite partie supérieure basse pression (13) étant séparée de la partie inférieure haute pression (18) par une cloison (14) s'étendant à travers le déversoir (15) dans le récipient de réacteur (1), et des pompes de circulation principales (59) étant montées dans des ouvertures respectives dans la cloison (14) pour créer ledit flux de circulation principal (65) depuis la partie basse pression (13) jusqu'à la partie haute pression (18) du réacteur, **caractérisée en ce que** les pompes de circulation principales (59) comprennent une roue de pompe (60) intégrée à une unité de nettoyage centrifuge (67) respective et comportant des aubes de pompe (61) avec une enveloppe environnante (61 a), qui est à son tour entourée par une paroi co-rotative (63) de la roue de pompe (60), une chambre centrifuge (62) étant formée entre la paroi co-rotative (63) et l'enveloppe (61 a), ladite paroi co-rotative (63) ayant sur ses surfaces intérieures des éléments de retenue (64) pour retenir les particules contaminantes piégées, et **en ce que** la chambre centrifuge (62) présente une fente d'entrée inférieure (68) et une fente de flux supérieure (69) à travers laquelle peut s'écouler un flux partiel (66), au moyen de la différence de pression entre la partie basse pression (13) et la partie haute pression (18), à travers l'unité de nettoyage centrifuge (67) dans une direction de flux opposée au flux de circulation principal (65) généré par les pompes de circulation principales (59) depuis la partie basse pression (13) vers la partie haute pression (18) du récipient de réacteur (1).
